# EUROPÄISCHE PATENTSCHRIFT

(11) **EP 0 593 547 B1**
(45) Veröffentlichungstag und Bekanntmachung des Hinweises auf die Patenterteilung: **12.02.1997**
(21) Anmeldenummer: 92913747.9
(22) Anmeldetag: 04.07.1992
(51) Int. Cl.: B60N 2/52

(54) **VORRICHTUNG ZUR STEIGERUNG DES SITZKOMFORTS BEI FAHRZEUGEN**
DEVICE FOR IMPROVING THE SEATING COMFORT IN VEHICLES
DISPOSITIF POUR L'AUGMENTATION DU CONFORT DES SIEGES DANS DES VEHICULES AUTOMOBILES

(30) Priorität: 05.07.1991 DE 4122247
(43) Veröffentlichungstag der Anmeldung: 27.04.1994
(60) Teilanmeldung: 96104845.1
(73) Patentinhaber: EBERT, Reinhard, D-97332 Volkach (DE)
(72) Erfinder: EBERT, Reinhard, D-97332 Volkach (DE)
(74) Vertreter: Pöhner, Wilfried Anton, Dr.
(86) Internationale Anmeldenummer: DE9200556
(87) Internationale Veröffentlichungsnummer: WO9301067

(56) Entgegenhaltungen:
- EP-A- 0 029 883
- EP-A- 0 054 948
- GB-A- 2 055 711
- US-A- 4 678 155
- US-A- 4 729 538
- US-A- 4 913 482
- PATENT ABSTRACTS OF JAPAN vol. 13, no. 229 (M-831)26. Mai 1989 & JP-A-10 44 354 (16-2-89 NISSAN MOTOR COMPANY)
- PATENT ABSTRACTS OF JAPAN vol. 13, no. 229 (M-831)26. Mai 1989 & JP-A-10 44 353 (NISSAN MOTOR COMPANY) 16 February 1989

## Beschreibung

Die Erfindung betrifft eine Vorrichtung zur Steigerung des Sitzkomforts bei Fahrzeugen, insbesondere Last- und Personenkraftwagen mit einem Fahrzeugaufbau, einem daran befestigtem, relativ dazu beweglichem Fahrwerk, einer mit dem Fahrzeugaufbau verbundenen Kabine, in der ein Sitz montiert ist, und einem Fluidgetriebe, bestehend aus einem durch die Relativbewegung zwischen Fahrzeugaufbau und Fahrwerk angetriebenen Generator, einer Fluidleitung und einem Motor.

Vorrichtungen der gattungsgemäßen Art sollen - insbesondere bei Nutzfahrzeugen - den Sitzkomfort durch Verringerung bzw. Dämpfung der durch Bodenunebenheiten erzeugten und über das Fahrwerk auf den Fahrzeugaufbau übertragenen vertikalen Beschleunigungen erhöhen. Dies ist bei Fahrzeugen der erwähnten Art einerseits deswegen besonders veranlaßt, weil derartige Fahrzeuge oft über unebene Wegstrecken oder auf unbefestigten Wegen gefahren werden, andererseits deswegen, weil ihre Fahrer - oft von Berufs wegen - nicht selten ihre gesamte Arbeitszeit mit dem Lenken der Fahrzeuge verbringen. Eine Erhöhung des Sitzkomforts bei derartigen Fahrzeugen ist daher nicht nur bloßer Luxus, sondern unter arbeitsmedizinischen und ergonomischen Gesichtspunkten angezeigt; sie wird letztlich vielfach der Steigerung der Arbeitsleistung zugute kommen. Viele berufsmäßige Führer derartiger Fahrzeuge leiden bekanntlich an Schäden der Zwischenwirbelscheiben, die durch die oben erwähnten vertikalen Beschleunigungen verursacht werden.

Aus der US-A-4,729,538 ist eine Vorrichtung gattungsgemäßer Art bekannt, bei der ein Fahrzeugsitz vertikal nach unten verschoben wird, falls das Fahrzeug ein Hindernis überfährt. Ein Generator wird durch die Relativbewegung zwischen dem Fahrzeugaufbau und dem Fahrwerk angetrieben und ist über eine Fluidleitung mit einem am Sitz montierten, die Sitzhöhe verschiebenden Motor verbunden. Der Sitz wird nach unten verstellt, falls sich das Fahrwerk dem Aufbau des Fahrzeugs nähert, während seine Position nicht verändert wird, falls das Fahrzeug in eine Bodenvertiefung hineinfährt.

Die GB-A 20 55 711 beschreibt ebenfalls eine Vorrichtung gattungsgemäßer Art, jedoch wird der Sitz nach oben verschoben, falls das Fahrwerk eine Bodenvertiefung erreicht.

Bei den bekannten Vorrichtungen zur Steigerung des Sitzkomforts bei Fahrzeugen ist als nachteilig anzusehen, daß lediglich der Sitz verstellt wird, während die den Fahrer umgebenden Fahrzeugteile, wie die Bedienungseinrichtungen, das Armaturenbrett, der Fahrzeugboden und die übrige Fahrgastzelle den durch die Straßenunebenheiten verursachten Bewegungen des Fahrzeugaufbaus folgen, wobei der Fahrkomfort durch die Relativbewegungen stark beeinträchtigt wird.

Die EP-A-0 054 948 beschreibt einen aufgehängten Fahrerstand innerhalb der Fahrzeugkabine eines Schleppers.

Die Erfindung hat es sich nunmehr zur Aufgabe gemacht, eine Vorrichtung zu schaffen, bei der Fahrersitz und Fahrer nahezu keinen durch Bodenunebenheiten ausgelösten Vertikalbeschleunigungen ausgesetzt sind.

Diese Aufgabe wird erfindungsgemäß dadurch gelöst, daß die Kabine relativ zum Fahrzeugaufbau vertikal verschiebbare ist, und daß der Motor den Abstand Kabine - Fahrzeugaufbau proportional dem Abstand Fahrwerk - Fahrzeugaufbau verändert.

Fluide - also Flüssigkeiten oder Gase - eignen sich zur Übertragung von Energie durch Transport der spezifischen Energie im Massenstrom. Derartige Getriebe sind in der Technik weit verbreitet. Durch Anwendung hoher Energiedichte (Druck) lassen sich mit derartigen Getrieben bekanntlich große Kräfte bei translatorischen Bewegungen mit kleinen Baugrößen der Gesamteinheit erzeugen bzw. übertragen. Der bei hohem Druck niedrige Volumenstrom ist mit Steuergeräten kleiner Abmessung zu schalten und verursacht nur niedrige Übertragungsverluste. Bei der vorgeschlagenen Lösung wird der Fluidstrom durch einen Generator erzeugt, der seinerseits durch die Relativbewegungen zwischen Fahrzeugaufbau und Fahrwerk angetrieben wird. Der von diesem Generator erzeugte Fluidstrom ist also diesen Relativbewegungen proportional. Durch die Fluidleitung wird der Fluidstrom auf den Motor übertragen, der seinerseits auf den Sitz wirkt. Die Wirkung ist dabei so, daß bei einer Verringerung des Abstands zwischen Fahrwerk und Fahrzeugaufbau durch den Motor auch der Abstand zwischen Kabine und Fahrzeugaufbau verringert wird (und umgekehrt). Nach alledem stellt sich der Vorteil der erfindungsgemäßen Lösung so dar, daß bei einer durch Bodenunebenheiten ausgelösten, nach oben gerichteten Vertikalbeschleunigung des Fahrwerkes und des damit verbundenen Fahrzeugaufbaus oder die Kabine eine ausgleichende Bewegung nach unten erfährt. Bei einer abwärts gerichteten Beschleunigung findet anhand analoger Überlegungen eine Ausgleichsbewegung in die Gegenrichtung statt. Damit kann bei geeigneter Auslegung von Generator und Motor erreicht werden, daß der Sitz von Vertikalbeschleunigungen unterhalb einer gewissen Größe der auslösenden Bodenunebenheiten nahezu völlig frei bleibt. Da die gesamte Kabine vertikal verstellt wird, entfallen die Relativbewegungen zwischen Sitz und Kabine, so daß der Fahrkomfort entscheidend verbessert ist.
Die soeben geschilderten Verhältnisse, die eine relative Beweglichkeit des Fahrwerkes gegenüber dem Fahrzeugaufbau, der mitunter auch als Fahrzeugrahmen bezeichnet werden würde, zur Voraussetzung hat, ist für Last- und Personenkraftwagen vornehmlich anwendbar.

Bei jenen Fahrzeugen, bei denen das Fahrwerk starr am Fahrzeugaufbau befestigt ist, kann der soeben geschilderte Erfindungsgedanke nicht verwirklicht werden. Die Alternative, durch die der erfindungsgemäß angestrebten Federungskomfort für die auf dem Fahrersitz befindliche Person zu verwirklicht werden kann, besteht dann darin, die Relativbewegungen der Kabine zum Fahrzeugaufbau bzw. Fahrzeugrahmen zum Antreiben des Generators zu nutzen und dementsprechend den Abstand des Sitzes relativ zur Kabine im Sinne eines Vibrationsausgleiches zu dämpfen. Die Relativbewegung der Kabine zum Fahrzeug wird zur Energieerzeugung genutzt, die eine Relativverstellung zwischen Kabine und Sitz entsprechend den momentan vorliegenden Bodenunebenheiten zur Folge hat. Im übrigen lassen sich die weiterhin in Zusammenhang mit PKW und LKW gegebenen Erläuterungen in analoger Weise auf Traktor und LKW übertragen, wobei im letzteren Fall die Sitzverstellung entsprechend der Relativbewegung zwischen Kabine und Fahrzeugaufbau erfolgt.

In einer Abwandlung der Erfindung wird zudem vorgeschlagen, daß der Generator aus einer Hubkolbenpumpe und der Motor aus einem doppelt wirkenden Schubmotor, insbesondere einem Balg oder Differentialzylinder besteht. Der damit erzielte Vorteil besteht darin, daß die Erfindung mittels bekannter und bewährter Elemente der fluidischen Energieübertragung realisiert wird. Die Hubkolbenpumpe kann hier derart angeordnet werden, daß sich das in ihrem Hubraum eingeschlossene Volumen bei einer Vergrößerung des Abstandes zwischen Fahrwerk und Fahrzeugaufbau verringert. Der dadurch erzeugte Fluidstrom bewirkt über den Schubmotor dann eine Bewegung des Sitzes relativ zu Fahrwerk und Fahrzeugaufbau nach oben. Analog erfolgt dieser Prozeß umgekehrt bei einer Verringerung des Abstandes zwischen Fahrwerk und Fahrzeugaufbau.

Der erfindungsgemäß vorgeschlagene Aufbau erfüllt Ausgleichsfunktionen dadurch, daß die sich aufbauenden Gegenkräfte umso stärker ausgeprägt sind, je tiefer die Position des Sitzes ist. Um diese vorteilhafte Charakteristik besser zu nutzen, wird deshalb in einer Weiterentwicklung der Erfindung die zusätzliche Anbringung eines Ausgleichsgefäßes an dem die vertikale Position des Sitzes bestimmenden Balg vorgeschlagen. Es entsteht so ein der Pneumatik zur Verfügung stehendes Zusatzvolumen. Das Ergebnis ist ein höherer Speicherdruck bei großem Volumen, d.h. der Federweg wird größer und es läßt sich zudem ein größerer Gegendruck einstellen. Weiter ist die Rückführung der Luft langsamer, so daß die Rückbewegung des Sitzes insgesamt - ebenso wie bei der Belastung - langsamer erfolgt und vor sich geht.

Weiterhin ist bevorzugt, das als Fluid Öl, insbesondere Hydrauliköl oder Gase, insbesondere Luft Verwendung finden.
Auch die hier vorgeschlagenen Stoffe sind in Fluidgetrieben in der Technik weit verbreitet, bekannt und bewährt.

In einer zweckmäßigen Weiterbildung ist vorgesehen, die erfindungsgemäße Vorrichtung sowohl rechts als auch links von der durch die Fahrtrichtung definierten Mittelachse des Fahrzeuges anzuordnen, Vorrichtungen also, die völlig unabhängig auf der rechten und linken Seite den vertikalen Höhenausgleich vornehmen. Entscheidend ist, daß bei unterschiedlich gemessenen Abständen zwischen Fahrwerk und Aufbau eine unterschiedliche Einstellung des Sitzes in der Vertikalen erfolgt, so daß im Ergebnis eine Ausrichtung des Sitzes (evtl. unter Verstellung der Kabine) zwischen der rechten und linken Fahrzeugseite erfolgen kann.

Beim Anfahren eines Hindernisses durch ein Fahrzeug erfolgt die Kraftübertragung unmittelbarer und direkter und wird subjektiv als unmittelbar empfunden. Bewegt sich das Fahrzeug in eine Bodenvertiefung hinein, geschieht die Kraftübertragung wesentlich langsamer, so daß sie subjektiv als weicher empfunden wird. Um hier einen Ausgleich zu schaffen, wird eine Fluidleitung, die aus zwei parallelen hydraulischen Leitungen besteht, vorgeschlagen, die jeweils in unterschiedlichen Richtungen beaufschlagt werden. Sie werden so eingestellt, daß die Durchflußmenge in jeder Richtung unterschidlich ist. Die Folge ist, daß die Zeitkonstante für die Ausgleichsbewegungen unterschiedlich ist und demzufolge die Einstellung des gleichen Fahrkomforts zulassen, unabhängig davon, ob das Fahrzeug gegen ein Hindernis oder in eine Bodenvertiefung fährt.

In einer weiteren Ausbildung der Erfindung ist daran gedacht, daß zwischen Generator und Motor eine Steuerung mit einem die Stärke des Fluidstromes regelnden Ventil angeordnet ist.

Die Vorteile einer derartigen Steuerungseinrichtung liegen in einer dadurch ermöglichten Feinabstimmung oder elektronisch geregelten Ausführung der Sitzbewegungen. Es ist hier an Einrichtungen zu denken, die die durch den Motor bewirkten Sitz- bzw. Kabinenbewegungen gegenüber den Fahrwerk-Fahrzeugaufbau- bzw. Fahrzeugaufbau-Kabinenbewegungen zeitlich verzögern und so das Ausgleichsverhalten der erfindungsgemäßen Vorrichtung weiter verbessern. Sofern das Ventil von außen einstellbar ist, ist eine nachträgliche Einstellung und Anpassung an das Körpergewicht des Fahrers sowie dessen persönliche und subjektive Bedürfnisse möglich.

Weiter wird vorgeschlagen, daß eine Fußstütze am Sitz starr befestigt ist.
Hiermit wird erreicht, daß auch die Beine des Fahrzeugführers Beschleunigungen nicht mehr ausgesetzt sind, soweit er sie auf der Fußstütze abstellt.

Weiterhin ist bevorzugt, daß der Sitz auf einer Bodenplatte befestigt ist, die wiederum über Dämpfungselemente, vorzugsweise aus einem Gummisegmentklotz mit Feder mit dem Fahrzeugaufbau verbunden ist.
Der damit erzielte Vorteil besteht in der Elimination hochfrequenter Schwingungen, die vom Motor erzeugt auf den Fahrer einwirken könnten. Weiterhin entsteht so eine zusätzliche Federung, die ein einseitiges Abfedern bei einseitigem Fahren über eine Bodenunebenheit sicherstellt. Zur Ausschaltung der damit verbundenen Querbeschleunigungen ist die unter Anspruch 1 beschriebene Erfindung alleine nicht in der Lage.

Schließlich wird vorgeschlagen, daß die Einrichtungen zur Fahrzeugsteuerung, insbesondere Pedale und Lenkrad raumfest mit dem Sitz verbunden sind oder mit den Sitzbewegungen mitgeführt werden.
Auch der hierdurch erzielte Vorteil ist offensichtlich. Der Fahrer ist damit von Relativbewegungen des Fahrzeugaufbaus nahezu vollständig abgekoppelt. Auch seine zur Fahrzeugbedienung benötigten Füße und Hände sind derartigen Beschleunigungen nicht mehr ausgesetzt.

Weitere Einzelheiten, Merkmale und Vorteile der Erfindung lassen sich dem nachfolgenden Beschreibungsteil entnehmen, in dem ein Ausführungsbeispiel der Erfindung dargestellt ist.

Die erfinderische Vorrichtung umfaßt den gesamten Fahrzeugaufbau sowie das relativ dazu bewegliche Fahrwerk und die im Ausführungsbeispiel mit einer Scherenmechanik daran relativ dazu beweglich befestigte Kabine. Vorhanden ist hier auch das gesamte Fluidgetriebe, das aus einem Generator einer Fluidleitung und einem auf die vertilalen Kabinenbewegungen wirkenden Motor besteht. Im Ausführungsbeispiel besteht der Generator aus einer Hubkolbenpumpe. Der Motor ist hier ein Balg, also ein doppelt wirkender Schubmotor, dessen Bewegungsrichtung von der wechselnden Beaufschlagung abhängt. Weiterhin ist die Steuerungseinrichtung vorhanden, die zwischen Fluidleitung und Motor angeordnet ist.

Bei Vergrößerung des Abstandes zwischen Fahrwerk und Fahrzeugaufbau wird das im Hubraum der Hubkolbenpumpe eingeschlossene Volumen verringert und der dadurch erzeugte Fluidstrom über die Fluidleitung auf den Balg übertragen, der bewirkt, daß die Kabine eine entgegengesetzte Relativbewegung ausführt.

## Patentansprüche

1. Vorrichtung zur Steigerung des Sitzkomforts bei Fahrzeugen, insbesondere Last- und Personenkraftwagen mit einem Fahrzeugaufbau, einem daran befestigtem, relativ dazu beweglichem Fahrwerk, einer mit dem Fahrzeugaufbau verbundenen Kabine, in der ein Sitz montiert ist, und einem Fluidgetriebe, bestehend aus einem durch die Relativbewegung zwischen Fahrzeugaufbau und Fahrwerk angetriebenen Generator, einer Fluidleitung und einem Motor, **dadurch gekennzeichnet**, daß die Kabine relativ zum Fahrzeugaufbau vertikal verschiebbar ist und daß der Motor den Abstand Kabine - Fahrzeugaufbau proportional dem Abstand Fahrwerk - Fahrzeugaufbau verändert.

2. Vorrichtung nach Anspruch 1, **dadurch gekennzeichnet**, daß der Generator eine Hubkolbenpumpe und der Motor ein doppelt wirkender Schubmotor, insbesondere ein Balg oder ein Differentialzylinder ist.

3. Vorrichtung nach Anspruch 2, **dadurch gekennzeichnet**, daß der Balg mit einem ein- oder mehrkammerigen Ausgleichsgefäß in Verbindung steht.

4. Vorrichtung nach einem der Ansprüche 1 bis 3, **dadurch gekennzeichnet**, daß als Fluid Öl, insbesondere Hydrauliköl oder Gase, insbesondere Luft Verwendung finden.

5. Vorrichtung nach einem der Ansprüche 1 bis 4, **dadurch gekennzeichnet**, daß zwischen Generator und Motor eine Steuerung mit einem die Stärke des Fluidstroms regelnden Ventil angeordnet ist.

6. Vorrichtung nach einem der Ansprüche 1 bis 5, **dadurch gekennzeichnet**, daß rechts und links von der Mittelachse des Fahrzeugs jeweils eine Vorrichtung gemäß Anspruch 1 bis 5 angeordnet ist, die auf die Position von Sitz und Kabine einwirkt.

7. Vorrichtung nach einem der Ansprüche 1 bis 6, **dadurch gekennzeichnet**, daß die Fluidleitung aus zwei parallelen Leitungen besteht, die in entgegengesetzten Richtungen beaufschlagt sind und unterschiedliche Durchlaßquerschnitte aufweisen.

8. Vorrichtung nach einem der Ansprüche 1 bis 7, **dadurch gekennzeichnet**, daß eine Fußstütze am Sitz starr befestigt ist.

9. Vorrichtung nach einem der Ansprüche 1 bis 8, **dadurch gekennzeichnet**, daß der Sitz auf einer Bodenplatte befestigt ist, die wiederum über Dämpfungselemente, vorzugsweise bestehend aus einem Gummisegmentklotz mit Feder, mit dem Fahrzeugaufbau verbunden ist.

10. Vorrichtung nach einem der Ansprüche 1 bis 9, **dadurch gekennzeichnet**, daß die Einrichtungen zur Fahrzeugsteuerung, insbesondere Pedale und Lenkrad mit den Sitzbewegungen mitgeführt werden.

## Claims

1. Device to increase the seating comfort of vehicles, especially trucks and passenger cars having a vehicle body, to which a chassis is affixed and is movable in relation thereto, a cabin that is connected to the vehicle body, in which a seat is mounted, and a fluid drive unit, consisting of an generator actuated by the relative movement between the vehicle body and chassis, a fluid line and a motor, **wherein** that said cabin is displaceable vertically relative to the vehicle body and that the motor changes the cabin - vehicle body distance proportionally to the chassis - vehicle body distance.

2. Device according to claim 1, **wherein** said generator is a reciprocating piston pump and the motor is a double-acting thrust motor, especially a bellows or a differential cylinder.

3. Device according to claim 2, **wherein** said bellows is connected to a single or multiple chamber compensating tank.

4. Device according to one of claims 1 to 3, **wherein,** for the fluid, oil, especially hydraulic oil or gases, especially air, are used.

5. Device according to one of claims 1 to 4, **wherein** between said generator and said motor a control is disposed with a valve that regulates the strength of the fluid flow.

6. Device according to one of claims 1 to 5, **wherein** to the right and left of the centre axle of the vehicle respectively a device according to claim 1 to 5 is disposed, which affects the position of the seat and cabin.

7. Device according to one of claims 1 to 6, **wherein** said fluid line consists of two parallel lines which are impinged in opposite directions and have different passage cross sections.

8. Device according to one of claims 1 to 7, **wherein** a foot rest is affixed to the seat.

9. Device according to one of claims 1 to 8, **wherein** said seat is affixed to a floor plate which in turn is connected via cushioning members, preferably consisting of a segmented rubber pad, to the vehicle body.

10. Device according to one of claims 1 to 9, **wherein** the mechanisms for vehicle control, especially pedals and steering wheel, are incorporated in the seat movements.

## Revendications

1. Dispositif destiné à renforcer le confort de la position assise dans les véhicules, en particulier les véhicules utilitaires et les automobiles de tourisme avec une carrosserie, un châssis fixé à cette carrosserie tout en étant mobile par rapport à celle-ci, une cabine reliée à la carrosserie dans laquelle est monté un siège et un mécanisme hydraulique composé d'un générateur entraîné par le mouvement relatif entre la carrosserie et le châssis, d'une conduite pour le fluide et d'un moteur, **caractérisé en ce que** la cabine peut glisser verticalement par rapport à la carrosserie et que le moteur modifie la distance entre la cabine et la carrosserie proportionnellement à la distance entre le châssis et la carrosserie.

2. Dispositif selon la revendication 1, **caractérisé en ce que** le générateur est une pompe à piston alternatif et que le moteur est un moteur exerçant une poussée dans deux sens, en particulier un soufflet ou un vérin différentiel.

3. Dispositif selon la revendication 2, **caractérisé en ce que** le soufflet est communique avec un réservoir de compensation à une ou plusieurs chambres.

4. Dispositif selon une des revendications 1 à 3, **caractérisé en ce que** l'on utilise comme fluide de l'huile et, en particulier, de l'huile hydraulique ou des gaz, en particulier, de l'air.

5. Dispositif selon une des revendications 1 à 4, **caractérisé en ce qu'une** commande dotée d'une soupape régulant la quantité du flux de fluide est placée entre le générateur et le moteur.

6. Dispositif selon une des revendications 1 à 5, **caractérisé en qu'un** dispositif selon les revendications 1 à 5 est placé tant à droite et qu'à gauche de l'axe médian du véhicule, dispositif qui fait effet sur la position du siège et de la cabine.

7. Dispositif selon une des revendications 1 à 6, **caractérisé par le fait que** la conduite pour le fluide est composée de deux conduites parallèles de courant d'alimentation contraire et qui ont des sections de passage différentes.

8. Dispositif selon une des revendications 1 à 7, **caractérisé par le fait qu'un** repose-pieds est fixé de façon rigide au siège.

9. Dispositif selon une des revendications 1 à 8 **caractérisé en ce que** le siège est fixé sur une plaque qui elle-même est reliée à la carrosserie du véhicule par des éléments amortisseurs, de préférence constitués par un bloc de segments de caoutchouc à ressort.

10. Dispositif selon une des revendications 1 à 9 **caractérisé en ce que** les dispositifs destinés à la conduite du véhicule, en particulier les pédales et le volant sont entraînés avec les mouvements du siège.
